# EUROPEAN PATENT APPLICATION

(11) **EP 3 040 000 A1**
(43) Date of publication of application: **06.07.2016**
(21) Application number: 15203039.1
(22) Date of filing: 30.12.2015
(51) Int. Cl.: A47J 31/44

(54) **METHOD AND APPARATUS FOR DISPENSING FROTHED MILK**

(30) Priority: 05.01.2015 IT MI20150003
(71) Applicant: Gruppo Cimbali S.p.A., 20082 Binasco (MI) (IT)
(72) Inventor: GIULIANO, Mario, 20082 Binasco (IT); SAMPAOLI, Davide, 20082 Binasco (IT)
(74) Representative: Acco, Stefania

(57) **Abstract**

A method and an apparatus for preparing and dispensing cold and hot foamed milk, wherein the hot or cold foamed milk is dispensed selectively along an outlet duct (20) connected to the delivery of a pump (5) and ending with a dispensing outlet (16) through an electronic control for introducing steam into the outlet duct in a flow-through heater (17) arranged on the outlet duct (20), wherein the flow of milk mixed with air passes through the heater (17) towards the dispensing outlet (16) and the introduction of steam is along a direction transverse to the flow direction.

## Description

The present invention concerns a method and an apparatus for preparing and dispensing cold or hot foamed milk. In the preferred embodiments, the apparatus and the method are automatic.

Automatic machines for preparing foamed and non-foamed milk, for preparing hot drinks with or without coffee, such as "latte" and cappuccino, have been developed. In such machines the milk can be heated through the introduction of steam into the liquid or through the passage of the liquid in a flow-through heater arranged in the hydraulic circuit. Patent application EP 1 785 074 A1 describes an automatic apparatus for heating milk with steam and producing heated and foamed milk that comprises a mixing chamber in which a flow of milk enters at a predetermined flow rate and a flow of steam enters at a predetermined flow rate from respective separate ducts. In the milk duct there is a variable-speed peristaltic pump and the mixing chamber is connected, downstream, to a milk-foaming device in which air, milk and steam are conveyed. The variation of the speed of the pump modifies the flow rate of the milk and the ratio between the flow rates of the milk and of the steam. In this way, it is possible to adjust the temperature of the end product.

Patent US 7.507.430 relates to a machine for dispensing hot drinks that foresees an apparatus for automatically dispensing a flavouring, such as chocolate syrup, into a drink. A pump sucks milk from a container and a steam source is coupled with the outlet of the pump so that the milk is foamed or heated.

A system for preparing foamed hot milk that uses a steam heater, a feed for the milk and a separate feed for the steam is described in WO 2013/064232.

Patent application US 2011/00104329 describes a device for foaming milk that comprises a milk-conveying line, a steam-conveying line and an air-conveying line, which are connected to a foaming chamber. The average airflow can be controlled by means of repeated changes between a high air flow state and a low air flow state.

The protein material contained in the milk (casein) is known to facilitate the formation of air bubbles (the protein material reduces surface tension, promoting the stability of air bubbles), but the same protein material progressively degrades as the temperature of the milk increases, particularly in processes in which foaming uses the effects of the kinetic energy of a jet of steam. With a device that uses a pump to suck cold milk and air it is possible to heat the air/milk mixture in outlet from the pump in a subsequent stage.

Recently there has been increased interest in foamed cold milk-based drinks. Patent application EP 0 485 350 A1 describes a device for homogenizing, mixing and emulsifying products such as cream, coffee and milk, for example to whip cream or create milk froth and/or coffee crema, either hot or cold. In the described device, a pump has the function of sucking the liquid product to be treated and subjecting it to mechanical energy. In the suction duct there is an adjustable choke for introducing air. The delivery of the pump is connected to a duct equipped with means suitable for slowing down the flow of the air/product mixture so that the mixture undergoes an energetic mechanical whipping action inside the pump and, in passing through the duct, at the outlet it takes on a creamy appearance. In particular, the outlet duct must be such as to advantageously slow down the product.

Patent application US 2010/0075007 describes a method for producing cold or hot milk foam, in which a mixture of milk and air is sucked by means of a pump and conveyed selectively, through a choke point, directly or through a flow-through heater.

Applicant has observed that, in an apparatus for producing cold and hot foamed milk by sucking cold milk and air, the ratios of amounts of air and milk necessary to obtain a foaming of the hot milk of adequate quality are different with respect to those necessary to obtain cold foaming of milk, i.e. of milk at room temperature or chilled. Moreover, different amounts of air can be required if the final drink is added with flavourings in liquid form or depending on the type of milk used, e.g. if the milk is semi-skimmed or skimmed.

In an apparatus that uses a pump that sucks milk and air introduced into the milk duct upstream of the pump, like in devices of the type described in EP 0 485 350 A1 or in US 2010/0075007, the suction of air takes place by the dynamic effect of the milk running in the section of the suction duct. Milk and air are worked and mixed by the mechanical action of the pump, forming a creamy fluid composition. The Applicant has observed that the flow rate of the fluid composition in outlet from the pump is influenced by the consistency thereof. For example, in the case of a geared rotary pump, the internal members of the pump are more or less biased as a function of the higher or lower ratio between air and milk in inlet, whereas the flowing of the fluid composition, which has formed in the pump, through the elements downstream of the pump towards the dispensing outlet, e.g. restrictor points and ducts, depends on the viscosity of the fluid composition itself.

The present disclosure is relative to an apparatus configured to produce cold and hot foamed milk in which cold milk is mixed with air in the suction line of a pump and the selection to dispense cold or hot foamed milk takes place through control of the introduction of steam in a flow-through heater arranged along the outlet duct. Such an apparatus has the advantage of using a relatively simple hydraulic circuit, without the need for two separate lines towards the outlet for the cold and hot milk, and at the same time of changing quickly from cold dispensing to hot dispensing, e.g. at a temperature of between 65°C and 70°C.

Applicant has realised that, in a device that dispenses hot and cold foamed milk, the use of a variable flow rate pump associated with a control of the flow rate of the milk/air fluid composition in outlet from the pump make it possible to control the amount of foaming of the milk depending on the dispensing temperature of the drink, for example if the milk is dispensed at about 65°C for the preparation of a cappuccino or at a temperature no higher than 3-7°C for cold milk foams. In some embodiments, a control between the flow rates of the air and milk fluids in inlet to the pump makes the implementation of the quality control of the foaming of the milk simpler.

The present disclosure is also relative to a method for dispensing cold or hot foamed milk that comprises:
- sucking cold milk and air along a suction duct by means of a pump actuated by a motor, and
- selectively dispensing hot or cold foamed milk along an outlet duct connected to the delivery of the pump and ending with a dispensing outlet through an electronic control for introducing steam into a flow-through heater arranged on the outlet duct, wherein the flow of milk mixed with air passes through the heater towards the dispensing outlet and the introduction of steam is along a direction transverse to the flow direction of milk mixed with air.

In the preferred embodiments, the steam is introduced through a steam duct arranged transverse to the outlet duct and that opens into the outlet duct through an inlet of the flow-through heater and the electronic control for introducing steam comprises controlling the opening and closing of the steam duct to activate or deactivate, respectively, the supply of steam in the outlet duct.

Preferably, a steam on-off valve is arranged on the steam duct and the electronic control for introducing steam is made through the control of the opening of the steam on-off valve in the case of dispensing hot milk and the control that the steam on-off valve is in the closed position in the case of dispensing cold milk.

In the description and in the claims, the term direction "transverse" to the flow direction, and similarly the term duct "arranged transverse" to the outlet duct, are meant to indicate that the two directions (or the two ducts) intersect at a non-zero angle, preferably not smaller than 20°. In a preferred embodiment, the direction of introduction of the steam is perpendicular to the flow direction of the milk/air mixture in the outlet duct.

The present invention will be described in greater detail hereinafter with reference to the attached drawings, in which some but not all of the practical embodiments are shown, and which must be considered to be schematic representations not to scale.
FIG. 1 schematically shows an apparatus for producing and dispensing cold and hot foamed milk, in accordance with an embodiment of the present invention.
FIG. 2 is a graph showing the flow rates, Q, of the air (dashed line) and of the milk (solid line) measured separately using the circuit of Figure 1, as a function of the rotational speed of a variable speed pump.
FIG. 3 is a graph showing the density, D, of the cold foamed milk dispensed (g/cm³), thus in the absence of introduction of steam in the outlet duct, as a function of the rotational speed of a geared pump.
FIG. 4 schematically shows an apparatus for producing and dispensing cold and hot foamed milk, in accordance with a different embodiment of the present invention.

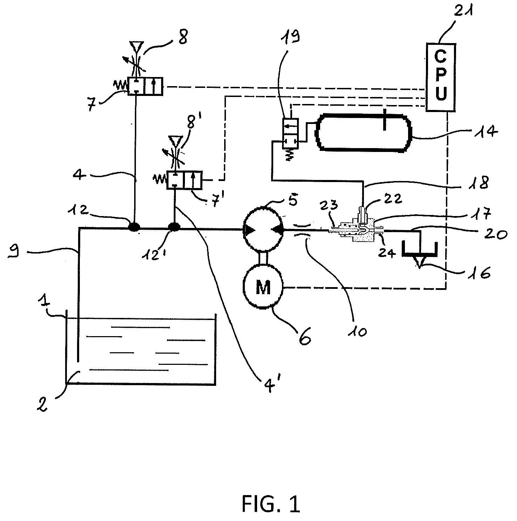

Figure 1 illustrates the diagram of an apparatus for producing and dispensing milk-based drinks, both cold and hot, with or without foam. In the preferred embodiments, the apparatus for dispensing cold or hot milk is part of a coffee machine, preferably espresso coffee machine, which dispenses coffee-based drinks, coffee and milk-based drinks or purely milk-based drinks, e.g. cappuccino, latte macchiato, *caffè estivo* with foamed cold milk, unfoamed hot milk etc.

Cold milk 2, preferably chilled to a temperature ranging from 3°C to 5°C, is contained in a container 1. The cold milk 2 is sucked from the container by means of a pump 5 actuated by a motor 6 along a suction duct 9 having a first open end inserted in the container 1 and a second end connected to the pump. The pump can for example be a geared pump. Upstream of the pump, a first air duct 4 is connected to the suction duct 9 through a first joining point 12. The first air duct has a free end for the inlet of ambient air and a first flow calibrator 8 is arranged thereupon for adjusting the flow rate of the air in inlet and therefore the amount of air introduced during the dispensing of a single type of drink. In the embodiment of Fig. 1, the adjustment of the air flow rate through the first flow calibrator 8 is manual. Preferably, the apparatus comprises a first on-off solenoid valve 7 for opening and closing the air duct 4, which is preferably controlled by an electronic control unit (CPU) 21. In Fig. 1, the control line that connects the CPU to the first air on-off valve 7 and in general the control lines between the CPU and other electric or electronic devices of the apparatus are indicated with a dashed line.

Optionally, along the air duct between the solenoid valve 7 and the joining point 12 of the air duct 4 a flow meter (not shown) is arranged to measure the air flow rate.

Milk and air are mixed inside the pump 5 and emitted from the outlet of the pump in an outlet duct 20 that ends with a dispensing outlet or end 16 of the foamed milk. The compressed milk and air mixture is pushed along the outlet duct 20 through a flow-through heater 17 arranged in the outlet duct and configured to heat the milk while is passes through the heater. In a preferred embodiment, shown in Fig. 1, the flow-through heater 17 is a steam heater connected to a steam generator 14 through a steam duct 18. The flow-through heater comprises a first inlet 23 for introducing the milk/air mixture pushed by the delivery of the pump. The steam duct 18 introduces pressurised steam into the flow-through heater 17 through a second inlet 22 of the heater, which is arranged with respect to the first inlet 23 so that the milk/air mixture and the steam are fed separately along two directions that intersect inside the heater. The two ducts 18 and 20 intersect at a non-zero angle, preferably not less than 20°. In a preferred embodiment, the direction of introduction of the steam is perpendicular to the direction of flow of the milk/air mixture in the outlet duct, in particular the steam duct 18 is arranged in a substantially perpendicular direction with respect to the direction of the outlet duct 20.

An example of flow-through heater suitable for the present apparatus and method is described in EP 1 977 668 A1.

A steam on-off solenoid valve 19 is inserted in the steam duct 18, to close and open said duct and thus interrupt or allow the flow of steam to the heater 17. In the case in which it is wished to dispense cold milk, the on-off valve 19 is in the closed position and the milk/air mixture passes through the heater without undergoing heating. In the case in which it is wished to dispense hot milk, the steam on-off valve 19 is in the open position and the milk is heated through the steam introduced into the second inlet 22. Preferably, the on-off solenoid valve 19 is a normally-closed valve, i.e. the closed position is its rest position. As described in greater detail hereinafter, the electronic control unit 21, which is connected to the solenoid valve 19 through a control line, actuates the opening of the solenoid valve.

In known ways, the flow-through heater comprises an inner tubular chamber along which the milk/air mixture flows and is mixed with the steam in the case in which the on-off valve 19 is open. The milk/air mixture, in the case of dispensing foamed cold milk, or the milk/air mixture and steam, in the case of dispensing foamed hot milk, comes out from an outlet 24 of the heater arranged along the outlet duct, at the opposite side of the heater with respect to the first inlet 23 of the heater.

The apparatus of Fig. 1 comprises a second air duct 4' connected to the suction duct 9 through a second joining point 12'. The second air duct can be arranged upstream or downstream of the first air duct 4. The second air duct 4' has a free end for the inlet of ambient air and a second flow calibrator 8' is arranged thereupon for the manual adjustment of the air flow rate in inlet and therefore of the amount of air introduced during the dispensing of a single type of drink. Preferably, the apparatus comprises a second on-off solenoid valve 7' for opening and closing the second air duct 4', which is preferably controlled by the electronic control unit 21.

The electronic control unit 21 controls the actuation of the on-off valve 19 of the steam duct 18 as well as the actuation of the valves 7 and 7', thus controlling whether or not the foamed milk is heated and whether the air must be introduced by the duct 4 or by the duct 4'.

It should be understood that the apparatus in accordance with the present disclosure is also capable of dispensing unfoamed cold or milk, in the absence of air in the suction duct 9. This can happen by closing the free end of the air ducts or by closing the air ducts 4 and 4' (i.e. putting the respective valve in closed position).

In an embodiment, the first and the second flow calibrator 8 and 8' are adjusted to two respective air flow rates that are different from each other.

The Applicant has observed that in order to produce the foaming of cold milk and of hot milk it is preferable to use two different air flow rates. In the circuit of Fig. 1, this is made possible by the two distinct air intakes with calibrators 8 and 8' adjusted manually for initial setting of the apparatus so as to introduce air at two different flow rates and selectively enabling the air inlets through the solenoid valves 7 and 7', both controlled by the electronic control unit 21. In particular, the on-off valves 7 and 7' are opened alternately, i.e. when the valve 7 is open the valve 7' is closed and vice-versa. In this way, the air introduced into the suction duct 9 comes from only one of the air ducts 4 or 4'. Preferably, downstream of the pump 5 and upstream of the flow-through heater 17 a choke 10 is arranged that performs the function of slowing down the flow of milk/air mixture worked mechanically inside the pump so as to give the foamed milk the desired consistency. For example, the choke is connected to the delivery mouth of the pump. The choke 10 can be adjustable.

The Applicant has understood that the use of a pump with a variable flow rate, and in particular a variable rotation speed, makes it easier and more efficient to select a ratio between air and milk in the air/milk mixture that, worked by the members inside the pump that move at a certain rotation speed, produces a high quality foaming of cold milk and of hot milk.

In the preferred embodiments, the suction pump has a variable flow rate. Preferably, the pump 5 has a variable speed and the motor 6 that actuates the pump is controlled by the control unit 21 so that the control unit controls the rotation speed of the pump.

The Applicant has observed that an increased rotation speed of the pump corresponds to an increased suction of the milk from the container along the duct 9 and to an increased suction of the air from the outside into the duct 4, or into the duct 4'. In other words, the amounts of milk and air that, per unit time, are introduced into the respective ducts, through the effect of the pressure jump that is produced between the ambient and the inside of the ducts, increase with the increase in rotation speed.

The flow rate of the milk and of the air sucked increases in different proportions with the rotation speed of the pump, due to the different nature of the milk, a fluid, and of the air (a gas), and, in turn, the speed of the pump is influenced by the resistance encountered by the foamed fluid along the ducts downstream of its delivery mouth.

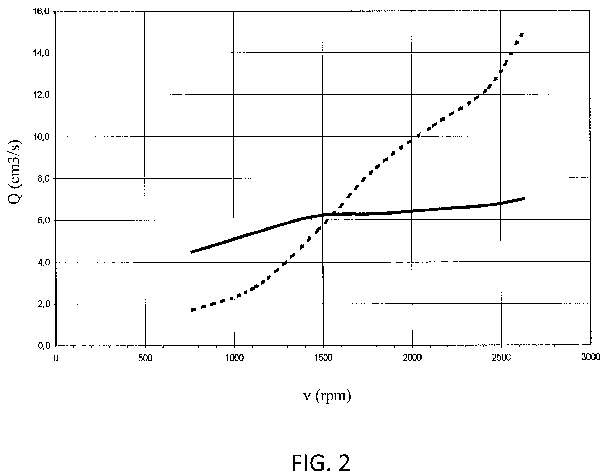

Figure 2 is a graph that shows the flow rate Q, in cm³/s, of the air (dashed line) and of the milk (solid line), measured separately, as a function of the rotation speed of the pump in the apparatus of Fig. 1. In order to highlight the behaviour of each of the two components of the milk/air mixture, the flow rate of the air was measured by closing the duct 9 upstream of the joining points 12 and 12' and the flow rate of the milk by closing the air ducts 4 and 4'. The pump used in the measurements was a geared pump the nominal variation of rotation speed of which, running freely (i.e. in the absence of load losses caused by the hydraulic circuit) was comprised between 600 and 3000 rpm for an average variation of power supply voltage of the motor of the pump between 6 and 24 volts.

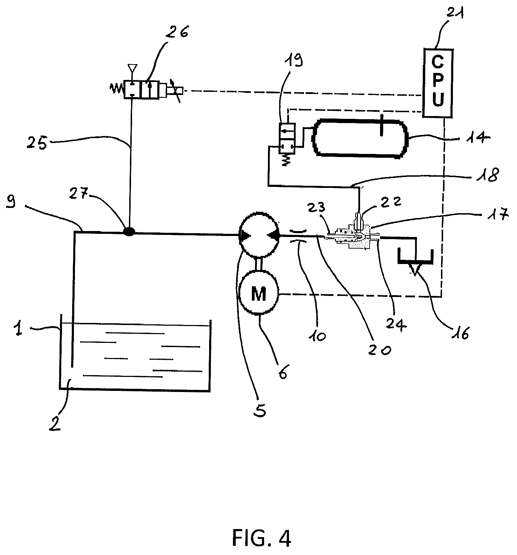

Without wishing to be bound by any theory or explanation, during the dispensing of foamed milk, the performance of the foaming process in the case of milk/air mixture is in general complex. For example, in the diagrams of Fig. 1 and of Fig. 4, described hereinafter, the suction of air takes place through the dynamic effect of the milk by flowing along the duct 9, characterised by a certain section, through the joining points 12, 12' (Fig. 1) or 27 (Fig. 4) in the suction duct, also characterised by a section. Milk and air enter into the pump and are mixed inside it forming a creamy composition. The flow rate in outlet from the pump and the flow rate of milk and air sucked are in turn influenced by the variation of consistency of the creamy composition that is formed, which plausibly affects the mechanical couplings and the movements of the elements inside the pump differently.

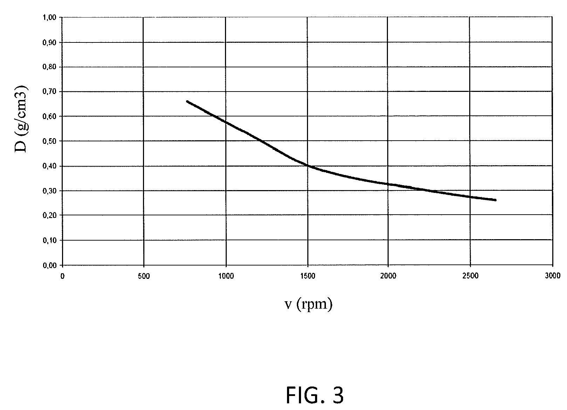

Figure 3 is a graph that shows the density, D, of the cold foamed milk dispensed (g/cm³), thus in the absence of introduction of steam into the outlet duct, as a function of the rotation speed of a geared pump, in an apparatus like the one of Fig. 1, in which one of the two air ducts is kept closed. The temperature of the milk was 5°C-7°C. The measurements were carried out by keeping the opening for introducing air from the outside into the air duct 4 fixed, through the flow calibrator 8, with the on-off valve 7 in open position. The speed of the pump was increased by increasing the power supply voltage at voltage increments of 3 volts, starting with an initial voltage of 6 V up to a nominal maximum voltage of 24 V. For each of the increments, amounts of milk were dispensed until containers of 300 cm³ were filled, the content of which was weighed. The density of the foamed milk was calculated assuming, for the air sucked from the outside through the calibrator 8, a volume of 1 cm³ and negligible weight whereas, for the milk, the approximation 1 g = 1 cm³ was made. The graph of Fig. 3 shows that the density of the cold foamed milk decreases monotonically with the increase in rotation speed of the pump.

From studies of the variation in density of the foamed milk and from qualitative evaluations of the product dispensed, the Applicant has understood that the ratios between the amounts of air and milk necessary for foaming of adequate quality of heated milk to be dispensed are different from those necessary to obtain a good foaming of cold milk to be dispensed. The Applicant has also understood that a high-quality foam in terms of compactness and consistency is obtained for cold milk for density values comprised between 0.20 a 0.40 g/cm³, preferably between 0.25 and 0.35 g/cm³, whereas the preferred range of values for foamed hot milk, for example for a cappuccino, is comprised between 0.50 and 0.70 g/cm³.

The Applicant has realised that it is possible to obtain a high-quality foam in an apparatus that dispenses both cold milk and hot milk by suitably selecting the rotation speed of the pump, and therefore the power supply voltage applied to the motor of the pump, so as to obtain a density of milk foam of value comprised between 0.20 and 0.40 g/cm³ to dispense foamed cold milk and a density of milk foam of value comprised between 0.50 and 0.70 g/cm³ to dispense foamed hot milk.

Since, as discussed earlier, the ratios between amounts of air and of milk necessary to obtain a foaming of hot or cold milk of adequate quality are different from each other, it is preferable to be able to select different amounts of air in inlet into the air duct in the case of preparation of cold or hot milk. In the apparatus of Fig. 1, the selection of the amount of air in inlet into the duct 4 and into the duct 4' is made manually by acting, respectively, on the first and on the second flow calibrator 8 and 8'. In an embodiment, the first air on-off solenoid valve 7 is in the closed position during the dispensing of hot milk, whereas it is actively brought into the open position when an operator selects to dispense foamed cold milk. The second air on-off solenoid valve 7' is in the closed position during the dispensing of cold milk, whereas it is actively brought into the open position when an operator selects to dispense foamed hot milk.

In an embodiment, the power supply voltage values of the motor of the pump that, for a certain value of amount of air introduced into the suction duct, correspond to respective density values of foamed milk, both cold and hot, are determined empirically.

When the operator, for example, after having changed the type of milk used and having selected a specific recipe, for example through a certain button on the apparatus or through an interactive display of the control unit, obtains a dispensing of foamed milk of unsatisfactory quality, said operator has the possibility of intervening by increasing or decreasing the power supply voltage of the pump and therefore its rotation speed. When the foaming obtained is judged to be satisfactory, the operator can store a voltage value for that specific recipe, which can be associated with a type of milk, so that such a recipe is associated with the speed induced by that power supply voltage, which allows foamed milk of satisfactory quality to be dispensed.

In a preferred embodiment, in the apparatus of Fig. 1, an operator selects, for example through a button or a touch-screen display, the type of milk-based or milk and coffee-based drink, in the case in which the apparatus is comprised in a coffee machine, which he wants the apparatus to prepare, in particular if foamed cold milk or foamed hot milk. In the case in which dispensing of foamed cold milk is selected, the electronic control unit 21 actuates the motor 6 of the variable speed pump 5 with a power supply voltage value previously determined to be such as to obtain a foam density value comprised between 0.20 and 0.40 g/cm³, preferably between 0.25 and 0.35 g/cm³. In the case in which dispensing of foamed hot milk is selected, the electronic control unit 21 actuates the motor 6 of the variable speed pump 5 with a power supply voltage value previously determined to be such as to obtain a foam density value comprised between 0.50 and 0.70 g/cm³.

In the preferred embodiments and with reference to Fig. 1, once a foamed cold milk-based drink is selected, through a button or the touch-screen, the electronic control unit 21 is configured to carry out the following operations:
- control the opening of the air on-off solenoid valve 7 of the duct 4 (whereas the solenoid valve 7' remains in the closed rest position), and
- actuate the motor 6 of the pump 5 at a stored power supply voltage value for the recipe relative to the selected cold foamed milk-based drink and corresponding to a density value comprised between 0.20 and 0.40 g/cm³ for the dispensing time period necessary to dispense the desired dose of milk.

When the operator selects a foamed hot milk-based drink, the electronic control unit 21 is configured to carry out the following operations:
- actuate the opening of the steam on-off valve 19 (normally closed) so as to introduce steam into the flow-through heater 17 and to mix the flow of milk/air pushed by the pump along the outlet duct with the steam;
- control the opening of the air on-off solenoid valve 7' of the duct 4' (whereas the solenoid valve 7 remains in the closed rest position), and
- actuate the motor 6 of the pump 5 at a power supply voltage value corresponding to a density value of foamed milk comprised between 0.50 and 0.70 g/cm³ for a dispensing time period necessary to dispense the desired dose of milk.

Preferably, through the selection of the type of drink, a dispensing time period is selected, which depends in general on the amount of milk that is wished to be dispensed.

In an embodiment, after the selection of the type of foamed milk-based drink, the control unit controls the opening of one of the two air ducts, the actuation of the pump at a given power supply voltage and the dispensing time period.

In an embodiment, the apparatus for dispensing cold or hot foamed milk is comprised in a machine that dispenses other ingredients, such as coffee and/or chocolate, the dispensing of which is controlled by a second electronic control unit. If the selected drink contains other ingredients, e.g. for preparing a cafe mocha (chocolate, espresso coffee and hot foamed milk), with the selection of the drink, at least one dispensing profile of the respective ingredient is selected, through the second control unit, said ingredient(s) preferably being dispensed from a separate outlet with respect to the milk dispensing outlet.

Figure 4 is a schematic representation of an apparatus for preparing and dispensing cold and hot milk-based drinks, with or without foam, according to a further embodiment. Same reference numerals as those of Fig. 1 indicate elements that are the same or having the same functionalities. With respect to the embodiment of Fig. 1, instead of the two air ducts 4 and 4', a single air duct 25 is foreseen connected to the suction duct 9 through a joining point 27. In the air duct 25 a solenoid valve 26 is arranged configured to control the flow of air introduced into the duct and controlled by an electronic control unit, e.g. CPU, 21. In an embodiment the solenoid valve is a proportional solenoid valve. The control of the solenoid valve through the CPU 21 makes it possible to programme the flow rate and/or the amount of air according to whether the apparatus is set to dispense cold or hot foamed milk. The CPU 21 also controls the motor 6 of the pump 5 by controlling the rotation speed of the pump and the steam on-off valve 19 to select to dispense cold or hot milk.

In an embodiment, after the selection of the type of foamed milk-based drink, the control unit controls the adjustment of the solenoid valve 26 at a certain air flow rate, the actuation of the pump at a given power supply voltage and the dispensing time period. In the case in which the drink is based on foamed hot milk, in the embodiments of figures 1 and 4, the control unit also controls the introduction of steam into the outlet duct (e.g. through the opening of the steam on-off valve).

## Claims

1. A method for dispensing cold or hot foamed milk comprising:
- sucking cold milk and air along a suction duct (9) by means of a pump (5) actuated by a motor (6), and
- selectively dispensing hot or cold foamed milk along an outlet duct (20) connected to the delivery of the pump (5) and ending with a dispensing outlet (16) through an electronic control of steam introduction into the outlet duct in a flow-through heater (17) arranged on the outlet duct, wherein the flow of milk mixed with air passes through the heater towards the dispensing outlet and the introduction of steam is along a direction transverse to the flow direction of milk mixed with air.

2. The method according to claim 1, wherein the steam is introduced through a steam duct (18) arranged transverse to the outlet duct (20) and opening into the outlet duct through an inlet (22) of the flow-through heater (17) and wherein the electronic control of steam introduction comprises controlling the opening and closing of the steam duct to activate or deactivate, respectively, the supply of steam into the outlet duct (20).

3. The method according to claim 1 or 2, wherein the pump (5) is a variable flow rate pump and selectively dispensing hot or cold foamed milk comprises adjusting the flow rate in outlet from the pump as a function of the selection to dispense hot milk or cold milk.

4. The method according to claim 3, wherein selectively dispensing hot or cold foamed milk comprises: selecting to dispense hot foamed milk by controlling the introduction of steam into the heater so that the milk/air mixture that flows along the heater is mixed with the steam and adjusting the flow rate of the pump comprises selecting at least one flow rate value of the pump such as to obtain a density value of foamed milk comprised between 0.50 and 0.70 g/cm³.

5. The method according to claim 3, wherein selectively dispensing hot or cold foamed milk comprises: selecting to dispense cold foamed milk in the absence of introduction of steam in the heater and adjusting the flow rate of the pump comprises selecting at least one flow rate value of the pump such as to obtain a density value of foamed milk comprised between 0.20 and 0.40 g/cm³.

6. The method according to one of claims 3 to 5, wherein selecting at least one flow rate value comprises selecting at least one respective power supply voltage value of the motor (6) of the pump (5), wherein the voltage values to dispense foamed cold milk and to dispense foamed hot milk are different from one another.

7. The method according to claim 3, wherein selectively dispensing hot or cold foamed milk comprises at least one of the following steps:
(i) selecting to dispense cold foamed milk, in the absence of introduction of steam in the heater (17) and actuating the motor (6) of the pump (5) at a first power supply voltage value corresponding to a density value of foamed milk comprised between 0.20 and 0.40 g/cm³ for a first dispensing time period;
(ii) selecting to dispense hot foamed milk by controlling the introduction of steam into the heater (17), and actuating the motor (6) of the pump (5) at a second power supply voltage value, different from the first power supply voltage value and corresponding to a density value of foamed milk comprised between 0.50 and 0.70 g/cm³ for a second dispensing time period.

8. The method according to claim 7, wherein step (i) also comprises selecting a first flow rate value of air introduced into the suction duct (9) and step (ii) also comprises selecting a second flow rate value of air introduced into the suction duct (9), different from the first flow rate value of air.

9. An apparatus for dispensing cold or hot foamed milk, comprising:
- a suction duct (9) connected to a first air duct (4; 25);
- a pump (5) actuated by a motor (6) and configured to suck milk and air along the suction duct (9), wherein the first air duct (4; 25) is arranged upstream of the pump (5) for the inlet of air into the suction duct (9);
- an outlet duct (20) connected to the delivery of the pump (5) and ending with a dispensing outlet (16) of cold or hot foamed milk, and
- a flow-through heater (17) arranged on the outlet duct (20) through which the milk/air mixture passes pushed by the pump, wherein the heater is connected with a steam generator (14) through a steam duct (18) transverse to the outlet duct for supplying steam into the milk/air mixture that passes through the heater;
wherein a steam on-off valve (19) is arranged in the steam duct (18) for selecting to dispense cold or hot milk through the selection of the closed and open position of the steam on-off valve.

10. The apparatus according to claim 9, wherein the steam on-off valve (19) is a solenoid valve controlled by an electronic control unit (21) for controlling the closing and opening of the steam duct through the steam on-off valve.

11. The apparatus according to claim 9 or 10, wherein the pump (5) is a variable speed pump and the motor (6) that actuates the pump is controlled by an electronic control unit (21) so that the control unit controls the rotation speed of the pump by controlling the power supply voltage of the motor of the pump.

12. The apparatus according to claim 11, wherein, if the steam on-off valve is in the closed position, the control unit (21) is configured to actuate the motor of the pump at a first voltage value and, if the steam on-off valve is in the open position, the control unit (21) is configured to actuate the motor of the pump at a second power supply voltage value, different from the first power supply voltage value so that the flow rate in outlet from the pump is different depending on whether cold milk or hot milk is to be dispensed, respectively.

13. The apparatus according to one of claims 9 to 12, wherein the flow-through heater (17) comprises a first inlet (23) for introducing the milk/air mixture pushed by the delivery of the pump, a second inlet (22) for introducing steam and arranged with respect to the first inlet (23) so that the milk/air mixture and the steam are supplied separately along two directions that intersect inside the heater, and an outlet (24) arranged along the outlet duct at the opposite side of the heater with respect to the first inlet (23).

14. The apparatus according to one of claims 9 to 13, also comprising a second air duct (4') upstream of the pump (5) for the inlet of air into the suction duct (9), wherein the first air duct (4) and the second air duct (4') comprise a respective first and second air on-off valve (7,7') connected to the electronic control unit (21) to control the opening of the first air duct in the case of dispensing cold foamed milk or of the second air duct in the case of dispensing hot foamed milk.

15. The apparatus according to one of claims 9 to 13, wherein in the first air duct (25) there is a solenoid valve (26) configured to control the air flow introduced into the air duct (25) and connected to the electronic control unit (21), wherein the electronic control unit is configured to programme the flow rate of air at a first air flow rate value in the case of selection to dispense cold foamed milk and at a second air flow rate value, different from the first air flow rate value, in the case of dispensing hot foamed milk.
